# EUROPÄISCHE PATENTSCHRIFT

(11) **EP 0 865 694 B1**
(45) Veröffentlichungstag und Bekanntmachung des Hinweises auf die Patenterteilung: **28.07.1999**
(21) Anmeldenummer: 96946174.8
(22) Anmeldetag: 06.12.1996
(51) Int. Cl.: H04B 7/26

(54) **SYSTEM ZUM AUTOMATISCHEN AUFBAU EINER FUNKVERBINDUNG ZUR DATENÜBERTRAGUNG ZWISCHEN ZWEI ODER MEHREREN SENDER-EMPFÄNGER-STATIONEN**
SYSTEM FOR AUTOMATIC ESTABLISHMENT OF A RADIO LINK FOR DATA TRANSMISSION BETWEEN TWO OR MORE TRANSMITTER-RECEIVER STATIONS
SYSTEME POUR ETABLIR AUTOMATIQUEMENT UNE LIAISON RADIO POUR TRANSMISSION DE DONNEES ENTRE DEUX OU PLUSIEURS STATIONS EMETTRICES ET RECEPTRICES

(30) Priorität: 08.12.1995 DE 19545893
(43) Veröffentlichungstag der Anmeldung: 23.09.1998
(73) Patentinhaber: SIEMENS AKTIENGESELLSCHAFT, 80333 München (DE)
(72) Erfinder: REITBERGER, Peter, D-81243 München (DE)
(86) Internationale Anmeldenummer: DE9602344
(87) Internationale Veröffentlichungsnummer: WO9721286

(56) Entgegenhaltungen:
- WO-A-93/22845
- WO-A-95/23485
- DE-A- 4 026 426
- GB-A- 2 287 381
- US-A- 5 012 469
- ELECTRONICS AND COMMUNICATION ENGINEERING JOURNAL, Bd. 5, Nr. 3, 1.Juni 1993, Seiten 147-156, XP000377790 STEELE R ET AL: "THIRD GENERATION PCN AND THE INTELLIGENT MULTIMODE MOBILE PORTABLE"

## Beschreibung

Mit der zwischenzeitlich weit fortgeschrittenen Funkübertragungstechnik werden einem Benutzer je nach Land und technischer Entwicklung auf den verschiedensten Frequenzbändern mit den verschiedenartigsten Zugriffsverfahren Funkverbindungen zur Datenübertragung angeboten.

So werden beispielsweise in der Bundesrepublik Deutschland im Gesamtfrequenzbereich von 90 kHz bis 275 GHz auf verschiedenen frequenzmäßig begrenzten Bändern für staatliche oder auch private Betreiber Frequenzbereichsnutzungen jeweils mit unterschiedlichen Funk-Zugriffsverfahren vom Bundesamt für Post und Telekommunikation zugewiesen, beispielsweise im Frequenzband zwischen 87 MHz und 100 MHz nach dem FDMA (Frequenzcy Division Multiple Access) Verfahren, im Frequenzband 890 - 960 MHz nach dem TDMA (Time Division Multiple Access) Verfahren und im Frequenzband 1,9 - 2,2 GHz nach dem CDMA (Code Division Multiple Access) Verfahren. Diese jeweiligen Vielfachzugriffsverfahren sind beispielsweise beschrieben in Meinke/Gundlach, Taschenbuch der Hochfrequenztechnik, 5. Auflage, S. O50 bis O65.

Es gibt zwischenzeitlich auch schon Vorschläge, in einem Frequenzband zwei oder mehrere unterschiedliche Zugriffsverfahren anzubieten (Meinke/Gundlach, Seite O63).

In anderen Ländern werden entsprechend andere Frequenzbänder mit anderen Zugriffsverfahren angeboten.

Ein Benutzer, der zur Datenübertragung nach einem dieser Verfahren eine Funkverbindung aufbauen will, wie dies beispielsweise zwischenzeitlich für die drahtlose Vernetzung von Computern gewünscht wird, ist hierbei als Nichtfachmann meist überfordert.

Es ist daher Aufgabe der Erfindung, ein System aufzuzeigen, mit dem eine solche Funkverbindung auf dem jeweils günstigsten Frequenzband mit dem jeweils günstigsten Zugriffsverfahren zur Datenübertragung aufgebaut werden kann.

Diese Aufgabe wird gelöst durch ein System laut Anspruch 1. Vorteilhafte Weiterbildungen ergeben sich aus den Unteransprüchen.

Beim erfindungsgemäßen System braucht der Benutzer selbst keine Kenntnisse über die jeweils angebotenen Frequenzbänder und Zugriffsverfahren für den Aufbau einer Funkverbindung, dies wird ihm vollautomatisch durch das erfindungsgemäße System abgenommen. Der Benutzer braucht dem System nur anzugeben, mit welcher gleichartigen Gegenstation er eine Funkverbindung zur Datenübertragung wünscht, das System sucht dann selbsttätig aus dem jeweiligen Standortgebiet, in welchem die Rufstation des Benutzers und die Gegenstation liegen, das jeweils momentan günstigste, d.h. beispielsweise am wenigsten durch fremde Sender belegte Frequenzband heraus, stellt fest, welche Zugriffsverfahren in diesem Frequenzband erlaubt werden und baut dann dort die gewünschte Funkverbindung automatisch auf.

Wenn durch das System festgestellt wird, daß alle im jeweiligen Standortgebiet angebotenen Frequenzbänder überbelegt sind und daher für einen Verbindungsaufbau zumindest momentan nicht zur Verfügung stehen, so wählt es automatisch aus den verschiedenen zur Verfügung stehenden Zugriffsverfahren jeweils dasjenige aus, daß auch in einem belegten Frequenzband eine Funkverbindung zusätzlich zu den dort bereits betriebenen Zugriffsverfahren ermöglicht.

Im Speicher jeder Station sind nicht nur die Daten der Frequenzbänder und der in diesen Bändern jeweils erlaubten Zugriffsverfahren abgespeichert, sondern vorzugsweise auch noch zusätzlich Vor informationen über die Frequenzbereichs-Restriktionen in den verschiedenen Ländern und zwar vorzugsweise weltweit. Durch Eingabe des Benutzers, an welchem Standort die Funkverbindung aufgebaut werden soll, können so die jeweiigen gesetzlichen Restriktionen beachtet werden und die Freiräume bezüglich Frequenzbänder und Zugriffsverfahren ausgewählt werden, die für einen Verbindungsaufbau zur Verfügung stehen. In diesen Freiräumen kann dann der Suchempfänger wirksam werden. Je geringer im Standortgebiet die gesetzlichen Restriktionen sind um so vielfältiger kann die Auswahl durch den Suchempfänger sein.

Für eine erste Analyse genügt es im allgemeinen, daß der Suchempfänger nur die jeweilige Amplitudenverteilung in dem abzusuchenden Frequenzband feststellt, er kann auf diese Weise sehr einfach und schnell feststellen, ob und in welchem Umfang ein Frequenzband belegt ist. Wenn dem System aus den abgespeicherten Daten außerdem bekannt ist, welches Zugriffsverfahren in einem abzusuchenden Frequenzband erlaubt ist, so kann mit hoher Wahrscheinlichkeit bereits durch eine solche Amplitudenauswertung festgestellt werden, daß die festgestellte Frequenzbandbelegung durch Sender erfolgt, die nach diesem erlaubten Zugriffsverfahren arbeiten. Wenn beispielsweise feststeht, daß in einem bestimmten Frequenzband in Deutschland nur ein FDMA-Zugriffsverfahren zugelassen ist, kann so auf einfache Weise festgestellt werden, daß eine erkannte Belegung in diesem Frequenzband auch tatsächlich eine FDMA-Belegung ist.

Mit einem einfachen im Suchempfänger vorgesehenen zusätzlichen Analysator kann jedoch auch unmittelbar automatisch das jeweilige Zugriffsverfahren erkannt werden, denn durch eine Analyse der Amplitudenverteilung im jeweils abgesuchten Frequenzband läßt sich auf einfache Weise beispielsweise zwischen TDMA, FDMA und CDMA unterscheiden. Besonders einfach wird eine solche Analyse, wenn in den verschiedenen Frequenzbändern aufgrund der Frequenzbereichszuweisungen spezielle standardisierte Verfahren erwartet werden, also beispielsweise GSM (Global System for Mobil Kommunikation)-Mobilfunksystem, DECT (Digital European Cordless Telekommunication), FDMA mit 50 kHz Raster oder CDMA mit 5 MHz Chip-Rate. In diesem Fall ist der Analysator für die Erkennung solcher bekannter standardisierter Zugriffsverfahren programmiert, so daß er selbsttätig auch aus mehreren im abgesuchten Frequenzband angebotenen Zugriffsverfahren unterscheiden kann

Für einen Verbindungsaufbau muß nicht unbedingt auch das Zugriffsverfahren analysiert und erkannt werden, wenn mit dem Suchempfänger freie Frequenzbänder gefunden werden. Dies ist nur bei belegten Frequenzbändern erforderlich.

Wenn auf diese Weise mit dem erfindungsgemäßen System in der Rufstation ein geeignetes Frequenzband mit einem geeigneten und in diesem Frequenzband erlaubten Zugriffsverfahren ausgewählt ist, wird der Sender der Rufstation automatisch auf dieses Frequenzband und dieses ausgewählte Zugriffsverfahren eingestellt und der Sender der Rufstation sendet dann die Adresse der gewünschten Gegenstation, mit der ein Verbindungsaufbau gewünscht wird. Für die Ruferkennung der Gegenstation gibt es die verschiedenartigsten bekannten Möglichkeiten. Eine Möglichkeit besteht darin, daß die Rufstation die Adresse der Gegenstation auf einem speziellen Kanal des ausgewählten Frequenzbandes aussendet, der für die jeweilige Adresse der Gegenstation reserviert ist.

So könnte beispielsweise in einem für FDMA geeigneten Frequenzband ein Verbindungsaufbau so organisiert sein, daß jeder Stationsadresse ein spezieller Kanal zugeordnet ist. So könnte beispielsweise die Gegenstation die Adresse 2340 besitzen und in dem ausgewählten Frequenzband von beispielsweise 225 - 400 MHz mit einem 25 kHz-FDMA Raster ist der Kanal mit der Adresse 2340 die Frequenz 283,5 MHz zugeordnet. In diesem Fall sendet also die Rufstation auf der Frequenz 283,5 MHz und die Gegenstation beobachtet in diesem Frequenzband wiederum nur diesen hier zugeordneten Kanal. Da die Gegenstation nicht nur dieses von der Rufstation ausgewählte Frequenzband überwachen muß, sondern auch andere noch zur Verfügung stehende Frequenzbänder, wird das Rufsignal der Rufstation vorzugsweise in Form eines sogenannten Interleaving-Codes übertragen, so daß das Rufsignal von der Gegenstation mit Sicherheit empfangen und ausgewertet werden kann. Während dieses ersten Rufvorganges wird beispielsweise nur die Rufadresse und die jeweilige Kanalempfehlung an die Gegenstation übertragen.

Eine andere Möglichkeit besteht darin, für ein spezielles Frequenzband und ein hierfür vorgesehenes Zugriffsverfahren einen speziellen Organisationskanal vorzusehen, auf dem die Rufstation ihren Ruf aussendet und der jeweils von der Gegenstation beim Suchvorgang überwacht wird. Auch andere Ruferkennungs-Organisationen, wie sie zwischenzeitlich beim Mobilfunk oder beim Bündelfunk und anderen Übertragungssystemen bekannt sind, können für den ersten Verbindungsaufbau beim erfindungsgemäßen System angewendet werden.

Natürlich sendet die Rufstation in einem Frequenzband, bei dem mehrere unterschiedliche Zugriffsverfahren möglich sind, ihren Ruf ebenfalls mit dem im jeweiligen Frequenband bevorzugten Zugriffsverfahren, das im zugehörigen Rufstation-Speicher entsprechend gekennzeichnet ist.

Wenn der Verbindungsaufbau mit der Gegenstation hergestellt ist kann in einem gegenseitigen Dialog zwischen Rufstation und Gegenstation gegebenenfalls auf ein anderes Frequenzband und ein anderes Zugriffsverfahren übergegangen werden, wenn beispielsweise die Gegenstation feststellt, daß für sie auf einem anderen Frequenzband eine bessere Funkverbindung aufbaubar ist. In einem gegenseitigen Dialog können außerdem noch die jeweiligen Parameter des ausgewählten Zugriffsverfahrens optimiert werden.

Das erfindungsgemäße System ist insbesondere geeignet für die drahtlose Vernetzung von Computern, da es in diesem Fall genügt, in jedem Rechner eine einfache zusätzliche Schaltkarte einzubauen, auf der die einzelnen Komponenten wie Suchempfänger, Sender, Datenempfänger, Speicher, Auswerteinrichtung usw. angebracht sind, was in moderner Bauelementetechnik mit geringstem Aufwand und sehr platzsparend möglich ist. Es ist dann beispielsweise nur noch erforderlich, außen am Rechnergehäuse eine entsprechende Sender-Empfänger-Antenne anzubringen. Anstelle einer zusätzlichen Antenne und einer Funkverbindung über den freien Raum könnte für eine Computervernetzung auch das Stromversorgungsnetz als Übertragungsleitungssystem ausgenutzt werden, so daß eine gesonderte Antenne entfällt und der Sender jeweils unmittelbar in das Stromnetz einspeist. Für eine solche Computervernetzung genügt eine geringe Senderleistung von nur einigen Watt.

Die Erfindung wird im folgenden anhand einer schematischen Zeichnung an einem Blockschaltbild eines erfindungsgemäßen automatischen Funkkonfigurationssystems näher erläutert.

Die Fig. zeigt das Blockschaltbild einer sowohl als Rufstation als auch als Gegenstation betreibbaren Sender-Empfänger-Station. Sie besteht aus einem üblichen Datenempfänger 1, der auf beliebige in einem breiten Gesamtfrequenzbereich von beispielsweise einigen kHz bis einige 100 GHz vorzugsweise digital über entsprechende Frequenzsynthesizer einstellbar ist. Der Ausgang dieses Datenempfängers 1 ist mit einer üblichen Datenauswerteinrichtung 2 verbunden. Der Datenempfänger 1 ist bezüglich seiner Empfangsfrequenz und seines Demodulators außerdem auf beliebige bekannte Zugriffsverfahren einstellbar.

Außerdem ist ein Sender 3 von einigen Watt Ausgangsleistung vorgesehen, der ebenfalls in einem beliebig breiten Gesamtfrequenzbereich vorzugsweise wiederum digital über Synthesizer auf beliebige Sendefrequenzen einstellbar ist. Für Empfänger 1 und Sender 3 könnte beispielsweise ein gemeinsamer Synthesizer vorgesehen sein. Auch dieser Sender 3 ist über eine Einstellvorrichtung 4 auf beliebige Zugriffsverfahren für eine Datenübertragung einstellbar.

Außerdem ist noch ein einfacher Suchempfänger 5 vorgesehen, der fortlaufend oder in vorbestimmten Zeitabständen den durch Sender und Empfänger vorgegebenen Gesamtfrequenzbereich absucht und durch den die jeweilige momentane Frequenzbelegung der im Gesamtfrequenzbereich angebotenen Frequenzbänder analysiert wird. Der Ausgang des Suchempfängers ist mit einem Analysator 6 verbunden, in welchem gegebenenfalls das in den jeweiligen Frequenzbändern verwendete Zugriffsverfahren analysierbar ist.

Außerdem ist ein Speicher 7 vorgesehen, in welchem jeweils die Daten der Frequenzbänder und der in diesen Frequenzbändern jeweils anwendbaren Zugriffsverfahren abgespeichert sind, die in dem jeweiligen Standortgebiet,. in welchem die Station für eine Funkverbindung betrieben werden soll, angeboten werden. Außerdem sind in diesem Speicher 7 auch noch Daten darüber abgespeichert, welche Frequenzbänder in den jeweiligen Ländern weltweit jeweils für Funkverbindungen freigegeben sind.

Der Speicher 7 und der Suchempfänger 5 sind mit einer Auswerteinrichtung 8 verbunden, in welcher unter Berücksichtigung der im Speicher 7 abgespeicherten Daten der in dem jeweiligen Land (Standortgebiet, in welchem ein Verbindungsaufbau gewünscht wird) freigegebenen Frequenzbänder bestimmt wird, welches der durch den Suchempfänger 5 abgesuchten Frequenzbänder für einen Verbindungsaufbau im Moment am besten geeignet ist. Im allgemeinen genügt hierfür eine Auswertung der Amplitudenverteilung in den jeweiligen Frequenzbändern. Nur wenn während des Suchvorgangs festgestellt wird, daß alle zur Verfügung stehenden Frequenzbänder belegt sind, muß auch noch eine Information des Analysators 6 bezüglich der verwendeten Zugriffsverfahren mit bei der Auswertung berücksichtigt werden. Die Auswerteinrichtung 8 ist mit der Einstelleinrichtung 4 für den Sender 3 verbunden. In dieser Einstelleinrichtung 4 ist ein weiterer Speicher 9 vorgesehen, in welchem die für einen ersten Verbindungsaufbau nötigen Minimalangaben für Frequenz- und Zugriffsverfahren-Einstellung des Senders 3 abgespeichert sind. Die Einstellvorrichtung 4 ist außerdem mit einer Datenquelle 10 verbunden, über welche die vom Benutzer zu übertragenden Daten dem Sender zugeführt werden und über welche auch der Benutzer den automatischen Verbindungsaufbau startet.

Wenn der Benutzer über seine Station eine Verbindung zu einer gleichartigen Gegenstation aufbauen will so drückt er nur die Verbindungsaufbau-Taste 11 und es läuft dann ein vollautomatischer Verbindungsaufbau ab. Der Suchempfänger 5 sucht alle im jeweiligen Standortgebiet angebotenen Frequenzbänder ab, stellt die momentane Frequenzbelegung fest und in der Auswerteinrichtung 8 wird dann ausgewählt, welches der abgesuchten Frequenzbänder mit welchem dort jeweils erlaubten Zugriffsverfahren für einen Verbindungsaufbau am besten geeignet ist, d.h. am wenigsten durch andere Sender gestört ist und für Kurzwellenverbindungen beispielsweise auch in der jeweiligen Tageszeit hierfür am günstigsten ist.

Wenn diese Auswahl getroffen ist wird über die Auswerteinrichtung 8 automatisch die Einstellvorrichtung 4 des Senders 3 entsprechend aktiviert, es wird dann das ausgewählte Frequenzband eingestellt und auch das dort erlaubte Zugriffsverfahren, diese Vorausinformationen für einen ersten Verbindungsaufbau erhält die Einstellvorrichtung 4 aus ihrem Speicher 9. Der Sender 3 sendet dann seinen Ruf an die Gegenstation, die mit ihrem Suchempfänger fortlaufend oder in vorbestimmten Zeitabständen ebenfalls sämtliche Frequenzbänder absucht. Je nach dem eingesetzten Ruferkennungsverfahren, das in beliebiger bekannter Weise ausgebildet sein kann, wird dann beispielsweise auf einem ausgewählten Adressenkanal oder einem speziellen Organisationskanal des von der Rufstation ausgewählten Frequenzbandes ein Ruf erkannt, über die Auswerteinrichtung 8 wird dann automatisch der Datenempfänger entsprechend eingestellt und so die Verbindung aufgebaut, die anschließend dann durch einen Dialog weiterhin bezüglich Frequenzband und/oder Zugriffsverfahren verbessert werden kann.

Mit der Einstellvorrichtung 4 wird entweder schon für die erste Rufaussendung oder beispielsweise auch erst nach dem vorläufigen Verbindungsaufbau mit der Einstellung von Minimalparametern der Sender 3 auf die gewünschte Sendefrequenz einstellt und auch der Modulator des Senders auf das jeweils ausgewählte Zugriffsverfahren. Außerdem wird die Leistung des Senders je nach Frequenzband entsprechend eingestellt, ebenso der Modulationsgrad und auch.die Datenrate, mit welcher die zu übertragenden Daten übertragen werden sollen. Außerdem wird eingestellt, ob ein Halb-Duplex-Betrieb (HDX) oder ein Voll-Duplex-Betrieb (FDX) durchgeführt werden soll. Wenn für den Verbindungsaufbau ein spezieller Antwortkanal vorgesehen ist, wird auch dieser über die Einstellvorrichtung 4 bestimmt. Auch eine Empfehlung über das jeweils anzuwendende Protokoll für die Datenübertragung, Fehlerkorrekturverfahren und dergleichen können über die Einstellvorrichtung bei der Datenaussendung eingestellt werden. Diese Angaben sind beispielsweise ebenfalls im Speicher 9 der Einstellvorrichtung 4 abgespeichert.

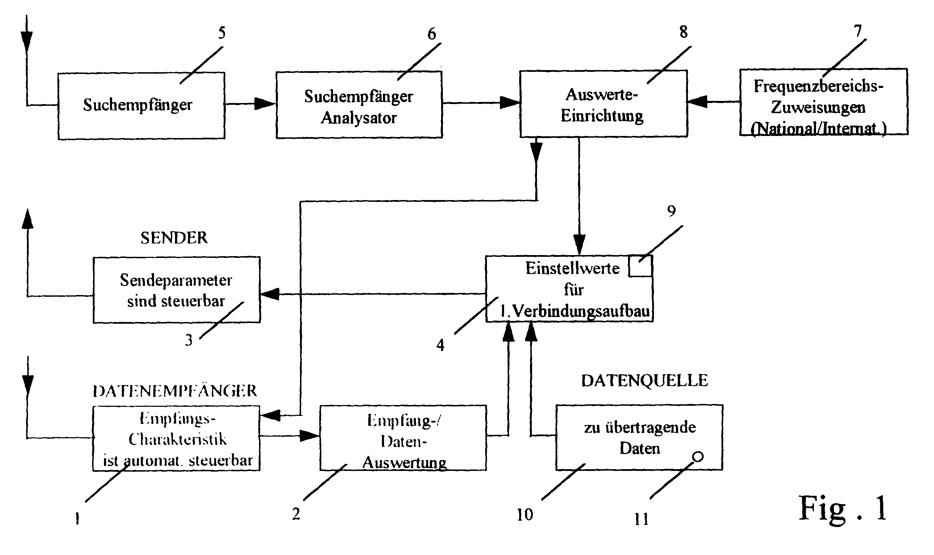

## Patentansprüche

1. System zum automatischen Aufbau einer Funkverbindung zur Datenübertragung zwischen zwei oder mehreren Sender-Empfänger-Stationen, **gekennzeichnet** durch folgende Merkmale:
a) in einem Speicher (7) jeder Station sind die Daten der Frequenzbänder und der in diesen Bändern jeweils anwendbaren Zugriffsverfahren abgespeichert, die in dem jeweiligen Standortgebiet der die Funkverbindung wünschenden Stationen für Funkverbindungen angeboten werden;
b) jede Station besitzt einen ständig oder in vorbestimmten Zeitabständen zeitweise sämtliche angebotenen Frequenzbänder absuchenden Suchempfänger (5), der die momentane Frequenzbelegung dieser angebotenen Frequenzbänder durch fremde Sender analysiert und auswertet ;
c) In einer Auswerteinrichtung (8) wird unter Berücksichtigung der abgespeicherten Frequenzbanddaten bestimmt, welches der abgesuchten Frequenzbänder mit welchem dort erlaubten Zugriffsverfahren für einen Funkverbindungsaufbau am besten geeignet ist ;
d) Über die Auswerteinrichtung (8) wird dann in diesem ausgewählten Frequenzband der Sender der die Verbindung wünschenden Rufstation aktiviert und die Adresse der Gegenstation ausgesendet;
e) Wenn der Suchempfänger (8) der Gegenstation diesen seine Adresse sendenden Rufstation-Sender empfängt, schaltet die Gegenstation in diesem Frequenzband mit dem dort erlaubten Zugriffsverfahren ihren Datenempfänger (1) auf Empfang und es wird dann zwischen Rufstation und Gegenstation die Datenübertragung ausgeführt.

2. System nach Anspruch 1, dadurch **gekennzeichnet,** daß mit dem Suchempfänger (5) jeweils die Amplitudenverteilung der angebotenen Frequenzbänder bestimmt wird.

3. System nach Anspruch 1 oder 2, dadurch **gekennzeichnet,** daß dem Suchempfänger (5) ein zusätzlicher Analysator (6) zum Feststellen des in einem abzusuchenden Frequenzband verwendeten Zugriffverfahrens vorgesehen ist.

4. System nach einem der vorhergehenden Ansprüche, dadurch **gekennzeichnet,** daß die Aussendung der Adresse der Gegenstation durch die Rufstation in dem ausgewählten Frequenzband nach dem dort bevorzugten Zugriffsverfahren erfolgt und der Suchempfänger (5) der Gegenstation in den Frequenzbändern jeweils mit den dort bevorzugten Zugriffsverfahren sucht.

## Claims

1. System for automatically setting up a radio link for transmitting data between two or more transmitter/receiver stations, characterized by the following features:
a) the data of the frequency bands and of the access methods which can be respectively applied in these bands and which are provided for radio links in the respective zone of the stations requesting the radio link are stored in a memory (7) of each station;
b) each station has a search receiver (5) which searches continuously, or at predetermined time intervals for a certain time all the frequency bands which are provided, and analyses and evaluates the instantaneous frequency allocation of these frequency bands by other transmitters;
c) in an evaluation device (8), it is determined, taking into account the stored frequency band data, which of the searched frequency bands with which access method permitted in it is most suitable for a radio link set up;
d) the transmitter of the call station requesting the link is then activated in this selected frequency band by means of the evaluation device (8), and the address of the opposite station is broadcast;
e) if the search receiver (5) of the opposite station receives this call station transmitter transmitting its address, the opposite station switches its data receiver (1) to reception in this frequency band with the access method permitted in it, and the transmission of data is then carried out between the call station and the opposite station.

2. System according to Claim 1, characterized in that the amplitude distribution of the frequency bands which are provided is determined in each case with the search receiver (5).

3. System according to Claim 1 or 2, characterized in that an additional analyser (6) for determining the access method used in a frequency band to be searched is provided to the search receiver (5).

4. System according to one of the preceding claims, characterized in that the broadcasting of the address of the opposite station is carried out by the call station in the selected frequency band in accordance with the access method preferred there, and the search receiver (5) of the opposite station searches in the frequency bands, in each case with the access methods preferred in them.

## Revendications

1. Système pour établir automatiquement une liaison radio pour la transmission de données entre deux ou plusieurs postes émetteurs récepteurs,
caractérisé par le fait que :
a) une mémoire (7) dans chaque poste mémorise les données des bandes de fréquences et des procédés d'accès respectivement utilisables dans ces bandes de fréquences, lesquelles bandes de fréquences et lesquels procédés d'accès sont offerts pour des liaisons radios dans la région de localisation des postes souhaitant la liaison radio ;
b) chaque poste a un récepteur chercheur (5) qui explore en permanence ou à intervalles de temps prescrits toutes les bandes de fréquences offertes et qui analyse et évalue l'occupation de fréquences momentanée de ces bandes de fréquences par des émetteurs étrangers ;
c) un dispositif d'évaluation (8) détermine, en tenant compte des données de bandes de fréquences mémorisées, celle des bandes de fréquences explorées et celui des procédés d'accès permis dans ladite bande de fréquences qui conviennent le mieux à un établissement de liaison radio ;
d) le dispositif d'évaluation (8) active alors dans cette bande de fréquences sélectionnée l'émetteur du poste appelant souhaitant la liaison et cet émetteur émet alors l'adresse du poste correspondant ;
e) si le récepteur chercheur (5) du poste correspondant reçoit son adresse émise par cet émetteur de poste appelant, le poste correspondant commute son récepteur de données (1) sur une réception dans cette bande de fréquences avec le procédé d'accès autorisé dans ladite bande de fréquences et la transmission de données est ensuite effectuée entre le poste appelant et le poste correspondant.

2. Système selon la revendication 1, caractérisé par le fait que la distribution des amplitudes de chacune des bandes de fréquences offertes est déterminée par le récepteur chercheur (5).

3. Système selon la revendication 1 ou 2. caractérisé par le fait qu'il est prévu à côté du récepteur chercheur (5) un analyseur (6) supplémentaire pour déterminer le procédé d'accès utilisé dans une bande de fréquences à explorer.

4. Système selon l'une des revendications précédentes, caractérisé par le fait que l'émission de l'adresse du poste correspondant par le poste appelant s'effectue dans la bande de fréquences sélectionnée selon le procédé d'accès préféré dans ladite bande de fréquences et que le récepteur chercheur (5) du poste correspondant cherche dans les bandes de fréquences à chaque fois par les procédés d'accès préférés dans la bande de fréquences considérée.
